# EUROPEAN PATENT APPLICATION

(11) **EP 2 489 550 A2**
(43) Date of publication of application: **22.08.2012**
(21) Application number: 12155865.4
(22) Date of filing: 17.02.2012
(51) Int. Cl.: B60Q 1/26, F21S 8/10, F21Y 101/02

(54) **Vehicle lamp**

(30) Priority: 17.02.2011 JP 2011031490
(71) Applicant: Koito Manufacturing Co., Ltd., Tokyo 108-8711 (JP)
(72) Inventor: Nakada, Asami, Shizuoka-Shi, Shizuoka (JP); Fujiu, Hideko, Shizuoka-Shi, Shizuoka (JP)
(74) Representative: Intès, Didier Gérard André

(57) **Abstract**

A vehicle lamp (10A, 10B, 10C, 10D) includes a light guide member (20, 120), and at least one light source (31, 33). The light guide member (20, 120) includes a light entrance portion (21a, 23a, 121a, 123a) from which light from the at least one light source (31, 33) enters the light guide member (20, 120), a first light guide (21,121) having first internally reflecting steps (25) configured to internally reflect a first part (L21, L121) of the light, and a first light exit portion (21b, 121b) from which the first part (L21, L121) of the light is output from the first light guide (21, 121), and a second light guide (23, 123) having second internally reflecting steps (26) configured to internally reflect a second part (L23, L123) of the light, and a second light exit portion (23b, 123b) from which the second part (L23, L123) of the light is output from the second light guide (23, 123). The first and second light guides (21, 23, 121, 123) extend such that a gap (22) is provided between the first and second light guides (21, 23, 121, 123). The light guide member (20, 120) is formed as a single unitary piece. The first and second light guides (21, 23, 121, 123) are configured and arranged such that the first light guide (21, 121) does not interfere with the second part (L23, L123) of the light that has been output from the second light exit portion (23b, 123b), and such that the second light guide (23, 123) does not interfere with the first part (L21, L121) of the light that has been output from the first light exit portion (21b, 121b).

## Description

The present invention relates to a vehicle lamp having a light guide. The light guide has a light entrance portion from which light from a light source enters the light guide, internally reflecting steps at which the light is internally reflected, and a light exit portion from which the light reflected by the internally reflecting steps exits the light guide.

JP1-075905U discloses a vehicle lamp comprising a first surface light-emitting unit (a first light guide) and a second surface light-emitting unit (a second light guide) that are arranged inside a lamp chamber formed by a lamp body and a front cover. The first light guide includes a plurality of laterally extending optical fibers that are attached on top of one another in a parallel manner, and a light entrance portion from which light from a first light source enters the optical fibers of the first light guide. The second light guide includes a plurality of vertically extending optical fibers that are attached side by side in a parallel manner, and a light entrance portion from which light from a second light source enters the optical fibers of the second light guide. The light that has entered the first light guide is reflected by internally reflecting steps on the rear surface of the first light guide, and exits the first light guide from the front surface of the first light guide. Likewise, the light that has entered the second light guide is reflected by internally reflecting steps on the rear surface of the second light guide, and exits the second light guide from the front surface of the second light guide. The first light guide is disposed in front of the second light guide.

That is, when the second light source is turned on, the light is output from the front surface of the second light guide and passes through the first light guide disposed in front of the second light guide. Further, when the first light source is additionally turned on, the light from the first light guide is added to the light from the second light guide, whereby the luminance is increased.

According to the conventional lamp described above, the first and second light guides are formed as separate members, which makes the assembling of the lamp onerous.

Further, the light output from the second light guide passes through the first light guide. That is, the first light guide interferes with the light from the second light guide. Therefore, the luminance of the light from the second light guide is reduced through the first light guide. In other words, light use efficiency of the light from the second guide is lowered. For example, when the first and second light guides are configured to serve together as a stop lamp, it may not be bright enough to be visually recognized as a signal lamp.

The present invention has been made in view of the above, and an object of the invention is therefore to provide a vehicle lamp having a configuration that is easy to assemble, and in which light use efficiency of light from a light guide is improved.

According to an aspect of the present invention, a vehicle lamp includes a light guide member, and at least one light source. The light guide member includes a light entrance portion from which light from the at least one light source enters the light guide member, a first light guide having first internally reflecting steps configured to internally reflect a first part of the light, and a first light exit portion from which the first part of the light is output from the first light guide, and a second light guide having second internally reflecting steps configured to internally reflect a second part of the light, and a second light exit portion from which the second part of the light is output from the second light guide. The first and second light guides extend such that a gap is provided between the first and second light guides. The light guide member is formed as a single unitary piece. The first and second light guides are configured and arranged such that the first light guide does not interfere with the second part of the light that has been output from the second light exit portion, and such that the second light guide does not interfere with the first part of the light that has been output from the first light exit portion.

Other aspects and advantages of the invention will be apparent from the following description, the drawings and the claims.

Fig. 1 is a front view of a tail-and-stop lamp according to a first embodiment of the present invention.

Fig. 2 is a vertical sectional view of the tail-and-stop lamp, taken along the line II-II of Fig. 1.

Fig. 3 is a horizontal sectional view of the tail-and-stop lamp, taken along the line III-III of Fig. 1.

Fig. 4 is an enlarged vertical sectional view of a portion of an effective reflecting surface of a reflector.

Fig. 5 is a front view of a tail-and-stop lamp according to a second embodiment of the present invention.

Fig. 6 is a horizontal sectional view of the tail-and-stop lamp, taken along the line VI-VI of Fig. 5.

Fig. 7 is a vertical sectional view of the tail-and-stop lamp, taken along the line VII-VII of Fig. 5.

Fig. 8 is a front view of a tail lamp according to a third embodiment of the present invention.

Fig. 9 is a horizontal sectional view of the tail lamp, taken along the line IX-IX of Fig. 8.

Fig. 10 is a plan view of a vehicle having door mirrors equipped with side turn signal lamps according to a fourth embodiment of the present invention.

Fig. 11 is a front view of one of the side turn signal lamps.

Fig. 12 is a rear view of the side turn signal lamp.

Fig. 13 is a horizontal sectional view of the side turn signal lamp, taken along the line XIII-XIII of Fig. 11.

Hereinafter, embodiments of the present invention will be described in detail with reference to the drawings.

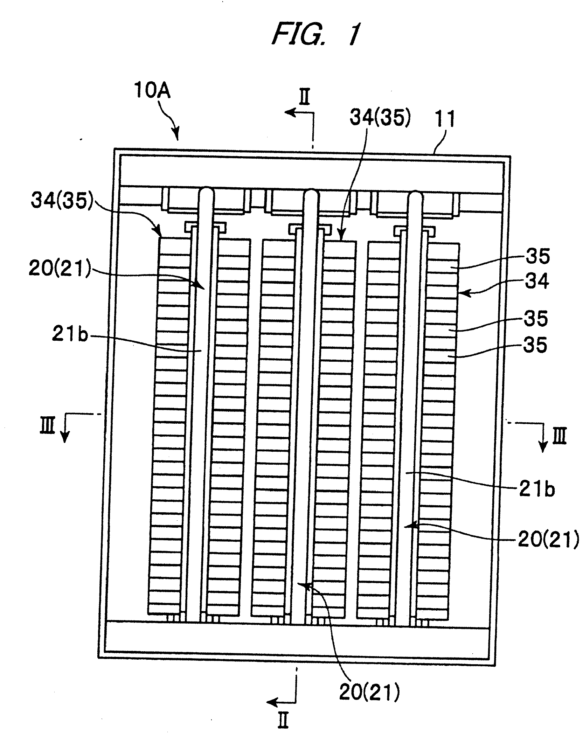

Figs. 1 to 4 show a tail-and-stop lamp 10A as an example of a vehicle lamp according to a first embodiment of the present invention.

As shown in Figs. 1 to 3, the tail-and-stop lamp 10A has a lamp body 11 and a front cover 12 made of a transparent resin. The front cover 21 is attached to the lamp body 11 to cover a front opening of the lamp body 11 to form a lamp chamber S.

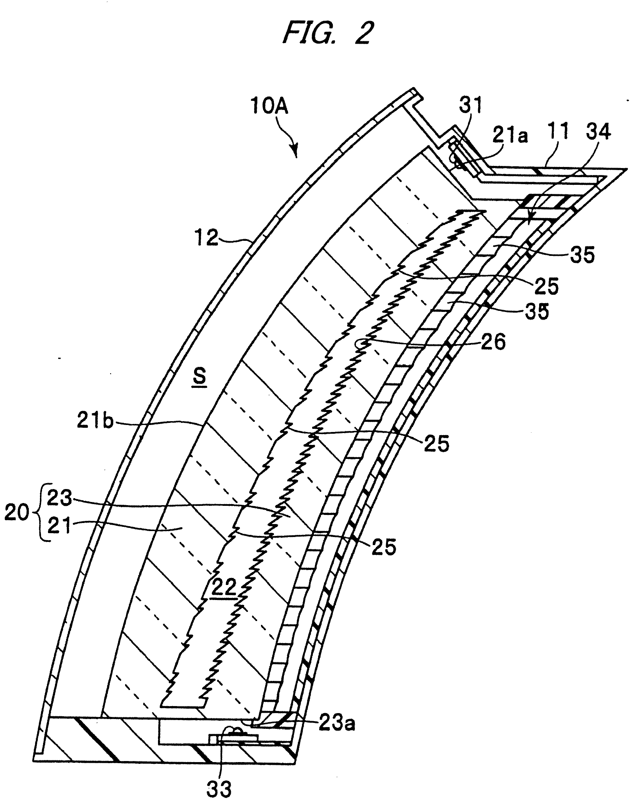

The tail-and-stop lamp 10A further includes vertically extending light guide members 20 disposed in the lamp chamber S. As shown in Fig. 2, each of the light guide members 20 is fixed to the lamp body 11 at a back side and a bottom side of the light guide member 20 by fixing means (e.g., snap engagement or bonding). The light guide members 20 arranged side by side in a lateral direction at regular intervals. For each of the light guide members 20, a light-emitting diode (LED) 31 is provided above the light guide member 20 and an LED 33 is provided below the light guide member 20. The LEDs 31, 33 serves as light sources for illuminating the light guide member 20. Further, a reflector 34 (an optical member) is provided for each of the light guide members 20. The reflector 24 is disposed inside the lamp chamber S and behind the light guide members 20 to forwardly reflect light that is output sideways from the light guide member 20.

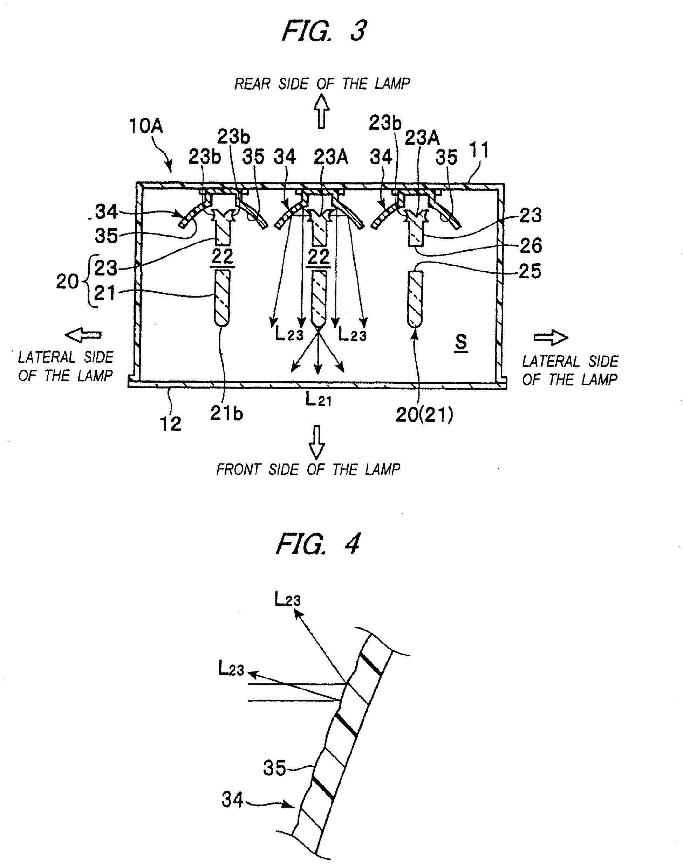

Each of the light guide members 20 is an integrally molded piece made of a transparent synthetic resin, and includes a first light guide 21 and a second light guide 23. The first and second light guides 21, 23 are bar-shaped portions, and extend substantially parallel to each other with a gap 22 therebetween. Because the light guide member 20 is formed as a single unitary piece, the first and second light guides 21, 23 can be attached to the lamp body 11 at one time. The first light guide 21 is disposed in front of the second light guide 23. As shown in Fig. 2, the first light guide 21 and the second light guide 23 are curved so as to conform to a curved shape of the front cover 12. As shown in Fig. 3, each of the first light guide 21 and the second light guide 23 has a rectangular horizontal cross section.

As shown in Fig. 2, the top surface and the bottom surface of each of the first light guide 21 and the second light guide 23 are flat. The LEDs 31, 33 are disposed so as to directly face the top surface 21a of the first light guide 21 and the bottom surface 23a of the second light guide 23, respectively. That is, the top surface 21a of the first light guide 21 serves as a light entrance portion from which light from the LED 31 enters the first light guide 21, and the bottom surface 23a of the second light guide 23 serves as a light entrance portion from which light from the LED 33 enters the second light guide 23.

Internally reflecting steps 25 and internally reflecting steps 26 are formed on surfaces of the light guides 21, 23 that are opposed to each other across the gap 22 to reflect light in opposite directions. The light reflected by internally reflecting steps 25 of the light guide 21 is forwardly output from a light exit portion 21b of the light guide 21 that corresponds to the internally reflecting steps 25. When viewed from the front, the light exit portion 21b has a rectangular shaped that is elongated in the vertical direction.

The internally reflecting steps 25 of the light guide 21 are arranged at regular intervals along a vertical direction. Thus, light exit regions on the front surface of the light guide 21 are also arranged at regular intervals along the vertical direction. As shown in Fig. 3, the front surface of the light guide 21 has an arc convex shape (a cylindrical convex shape) in a horizontal cross section. Therefore, light that is output forward from the light exit regions that corresponds to the internally reflecting steps 25 is distributed through the front cover 12 as laterally diffused light L21.

On the other hand, the internally reflecting steps 26 of the light guide 23 are formed continuously over the entire length in the vertical direction. As shown in Fig. 3, the back side of the light guide 23 is formed with a curved, forked portion 23A. On each of the lateral sides of the branch portion 23A, a light exit portion 23b is formed. In a front view, each of the light exit portions 23b has a rectangular shape that is elongated in the vertical direction. The light introduced into the light guide 23 is reflected by the internally reflecting steps 26, guided by the back-side forked portion 23A, and output sideways from the pair of light exit portions 23b.

The back surfaces of the forked portion 23A serve as internally reflecting surfaces to internally reflecting the light that has been rearwardly reflected by the internally reflecting steps 26, and are formed in a round shape so as to efficiently guide the light toward the light exit portions 23b. Alternatively, these internally reflecting surfaces of the forked portion 23A may be flat surfaces that are inclined from the front-rear axis of the lamp 10A by about 45°.

The light exit portions 23b has an arc concave shape (a cylindrical concave shape) in a horizontal cross section, whereby light that is output sideways from each light exit portion 23b is diffused the front-rear direction of the lamp.

Effective reflecting surfaces 35 of a reflector 34 are disposed on the left side and the right side of the light guide 23 so as to be opposed to the light exit portions 23b of the light guide 23. Light beams (diffuse light beams) that are output sideways from the light exit portions 23b are reflected forward by the reflector 34 (effective reflecting surfaces 35) and are distributed in the forward direction through the front cover 12.

As shown in Fig. 3, each of the effective reflecting surfaces 35 has a curved shape in a horizontal cross section such that light (diffuse light) that is output sideways from the associated light exit portion 23b is diffused only outward in the horizontal direction as the light goes forward (i.e., the light is not diffused inward in the horizontal direction). Therefore, the light guide member 20 does not interfere with diffuse light L23 reflected from the reflector 34 (effective reflecting surfaces 35). That is, either of the light guide 21, 23 does not interfere with light from the other light guide 21, 23. Thus, the light from the light guides 21, 22 is efficiently utilized.

As shown in Fig. 4, each of the effective reflecting surfaces 35 has convex shapes in a vertical cross section, whereby diffuse light L23 is also diffused upward and downward and distributed in the forward direction from the lamp 10A.

When the LED 33 is turned on, light beams that are output sideways from the light exit portions 23b of the light guide 23 are reflected by the reflector 34 and are distributed in the forward direction, whereby the entire area of the lamp 10A that corresponds to the reflector 34 (effective reflecting surfaces 35) emits light to function as a tail lamp.

On the other hand, when both of the LEDs 33 and 31 are lit, light beams that are output forward from the front light exit portion 21b of the light guide 21 are also distributed in the forward direction. Therefore, not only does the entire area corresponding to the reflector 34 (effective reflecting surfaces 35) emit light but also the regions, arranged at regular intervals generally in the vertical direction, of the front light exit portion 21b of the light guide 21 emit light. As a result, the light emission area and the luminance of the entire lamp 10A are increased and the lamp 10A functions as a stop lamp.

In particular, as for the front light exit portion 21b of the light guide 21, only the regions arranged at regular intervals generally in the vertical direction emit light. A novel manner of light emission of a stop lamp can be attained.

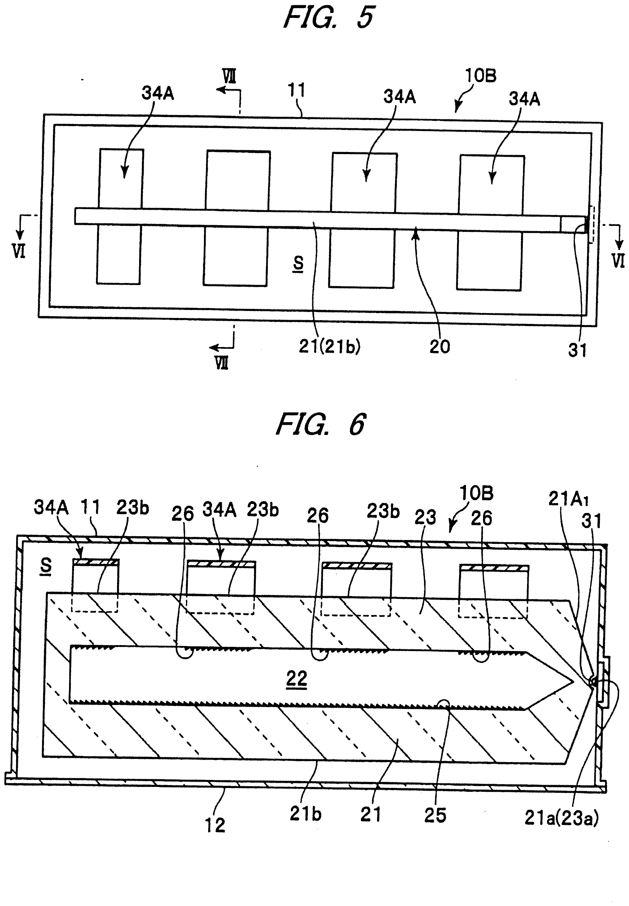

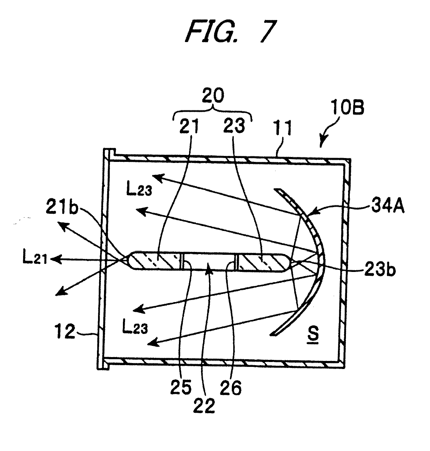

Figs. 5 to 7 show a vehicle tail-and-stop lamp as an example vehicle lamp according to a second embodiment of the invention.

According to the tail-and-stop lamp 10A of the first embodiment, the light guide member 20 having the first light guide 21 and the second light guide 23 which extend approximately parallel with each other with the gap 22 formed in between is disposed so as to extend generally in the vertical direction with the first and second light guides 21, 23 spaced from each other in the front-rear direction of the lamp. In contrast, the tail-and-stop lamp 10B according to the second embodiment is different from the tail-and-stop lamp 10A in being disposed so as to extend in the horizontal direction with first and second light guides 21, 23 spaced from each other in the front-rear direction of the lamp.

Further, in the first embodiment, the LEDs 31, 33 are provided for the respective light guides 21, 23. However, in the second embodiment, a light entrance portion 21a (23a) which is common to the light guides 21, 23 is formed at the end of a light introduction link portion 20A1 which is formed as one end portion (located on the right side when a lamp chamber S is viewed from the front side) of the light guide member 20A and a single LED 31 is disposed so as to directly face the light entrance portion 21a (23a).

The light entrance portion 21a (23a) has a concave spherical shape so that light emitted from the LED 31 can enter the light guide member 20A efficiently. Light that is input to the light introduction link portion 20A1 through the light entrance portion 21a (23a) is guided to the light guides 21, 23 by internal reflection.

Internally reflecting steps 25 and internally reflecting steps 26 are formed on surfaces of the light guides 21, 23 that are opposed to each other across a gap 22 to reflecting guided light in opposite directions. Reflectors 34A for forwardly reflecting light that is output from the light guide 23 is disposed behind the light guide member 20A (light guide 23).

In the light guide 21, guided light is reflected by the continuous internally reflecting steps 25 and output forward from a light exit portion 21b as diffuse light L21 that is diffused upward and downward. The diffuse light L21 passes through the front cover 12 and is distributed in the forward direction.

On the other hand, in the light guide plate 23, if reflected by a set of internally reflecting steps 26, guided light is output rearward from a region, opposed to the set of internally reflecting steps 26, of a light exit portion 23b and is reflected by the associated back-side reflector 34. Resulting light L23 which is diffused slightly upward and downward passes through the front cover 12 and is distributed in the forward direction.

With the above configuration, light that is output forward from the light exit portion 21b of the light guide 21 and light beams that are reflected forward by the reflectors 34A after being output from the light exit portion 23b of the light guide 23 cooperate to serve for light emission of a tail-and-stop lamp.

More specifically, light beams that are output rearward from the light exit portion 23b of the light guide 23 while being diffused upward and downward are reflected by the reflectors 34A and distributed in the forward direction, whereby the entire regions corresponding to the reflectors 34 emit light and the lamp 10B functions as a tail lamp.

On the other hand, light that is output forward from the front surface 21b of the light guide 21 is also distributed in the forward direction. Therefore, not only do the entire regions corresponding to the reflectors 34 emit light but also the front surface 21b of the light guide 21 emits light. As a result, the light emission area and the luminance of the entire lamp 10B are increased and the lamp 10A functions as a stop lamp.

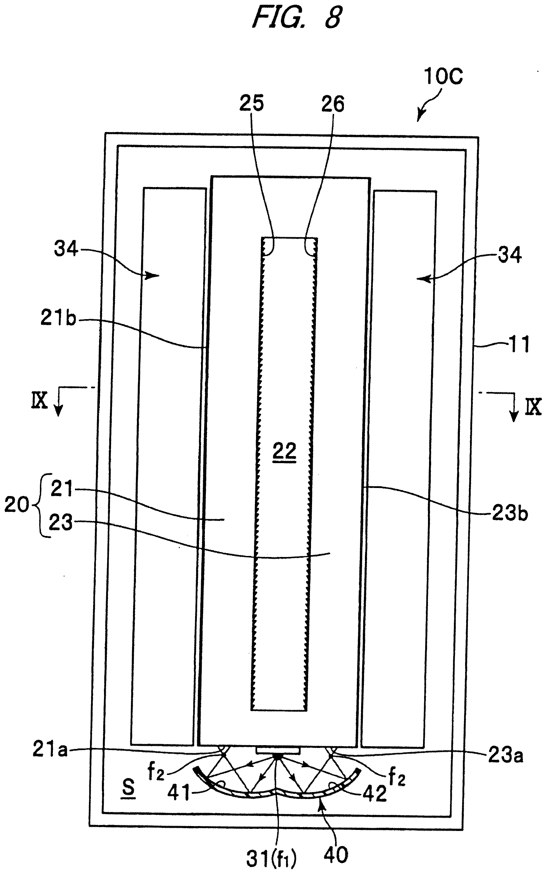

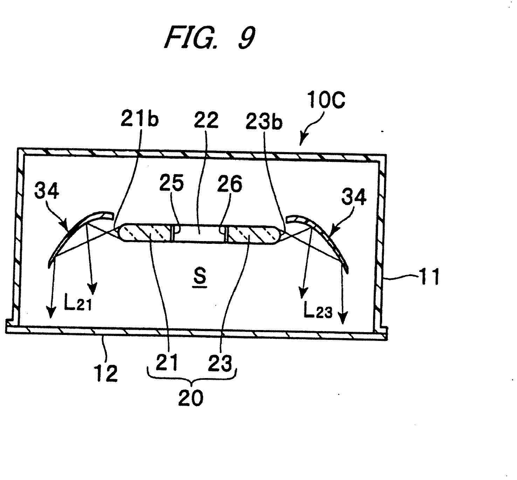

Figs. 8 and 9 show a vehicle tail lamp as an example vehicle lamp according to a third embodiment of the invention.

In the first and second embodiments, the light guide member 20, 20A is disposed such that the light guides 21, 23 are spaced from each other in the front-rear direction of the lamp. According to the tail lamp 10C of the third embodiment, a light guide member 20C is disposed so as to extend in the vertical direction such that light guides 21, 23 are spaced from each other in the lateral direction of the lamp.

The bottom surface of the light guide member 20C has light entrance portions 21a, 23a of the respective light guides 21, 23, and a single LED 31 for causing the light guides 21, 23 to emit light is disposed approximately at the center of the region, between the light entrance portions 21a, 23a, of the bottom surface of the light guide member 20C with its illumination axis directed downward.

An light entering side reflector 40 having a pair of ellipsoidal effective reflecting surfaces 41, 42 which have a common first focal point f1 at the position of the LED 31 or its vicinity and have second focal points f2 on or in the vicinities of the light entrance portions 21a, 23a, respectively, is disposed at such a position as to directly face the LED 31 which is attached to the bottom surface of the light guide member 20C.

Therefore, light emitted from the single LED 31 is input to the light guides 21, 23 in such a manner as to be guided accurately to the light entrance portions 21a, 23a of the pair of light guides 21, 23 by the light entering side reflector 40 (ellipsoidal effective reflecting surfaces 41, 42) and form spots there.

Internally reflecting steps 25 and internally reflecting steps 26 are formed on the entire surfaces of the light guides 21, 23 that are opposed to each other across a gap 22 to reflect guided light in opposite directions. Light beams being guided through the light guides 21, 23 are reflected by the internally reflecting steps 25 and the internally reflecting steps 26 to opposite directions.

Outside side surfaces, opposed to the internally reflecting steps 25 and the internally reflecting steps 26, of the light guides 21, 23 are light exit portions 21b, 23b, respectively, each having an arc convex shape (a cylindrical convex shape) in a horizontal cross section. Guided light beams reflected by the internally reflecting steps 25 and the internally reflecting steps 26 are output sideways from the light exit portions 21b, 23b, respectively. The output light beams are diffused forward and rearward.

Reflectors 34 are disposed on the left side and the right side of the light guide member 20C so as to be opposed to the respective light exit portions 21b, 23b. Light beams that are output sideways from the light guides 21, 23 are reflected by the reflectors 34, respectively. Resulting light beams L21, L23 which are diffused leftward and rightward pass through the front cover 12 and are distributed in the forward direction.

In the third embodiment, as shown in Figs. 8 and 9, the light guide member 20C is disposed to as to extend in the vertical direction such that the light guides 21, 23 are spaced from each other in the right-left direction. However, it suffices that a light guide member be disposed such that light guides 21, 23 are spaced from each other in a lamp lateral direction. For example, a light guide member may be disposed so as to extend in the horizontal direction such that light guides 21, 23 are spaced from each other in the vertical direction.

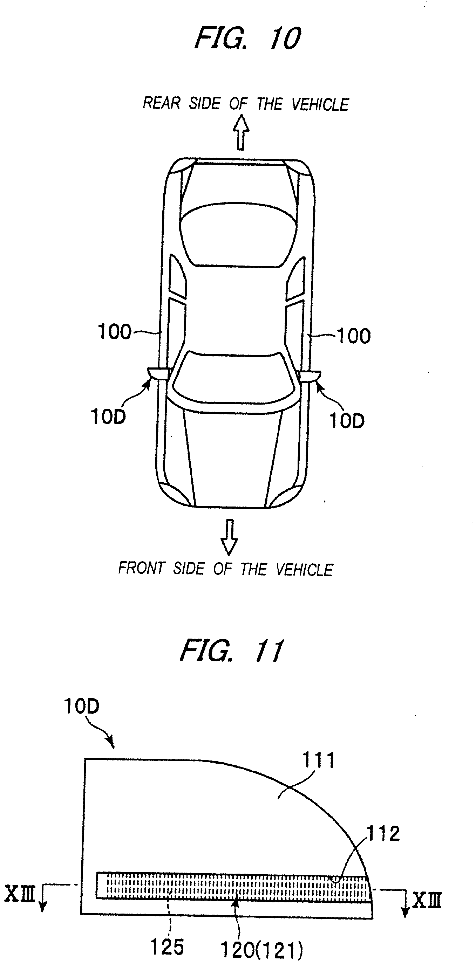

Figs. 10 to 13 show vehicle side turn signal lamps as an example vehicle lamps according to a fourth embodiment of the invention.

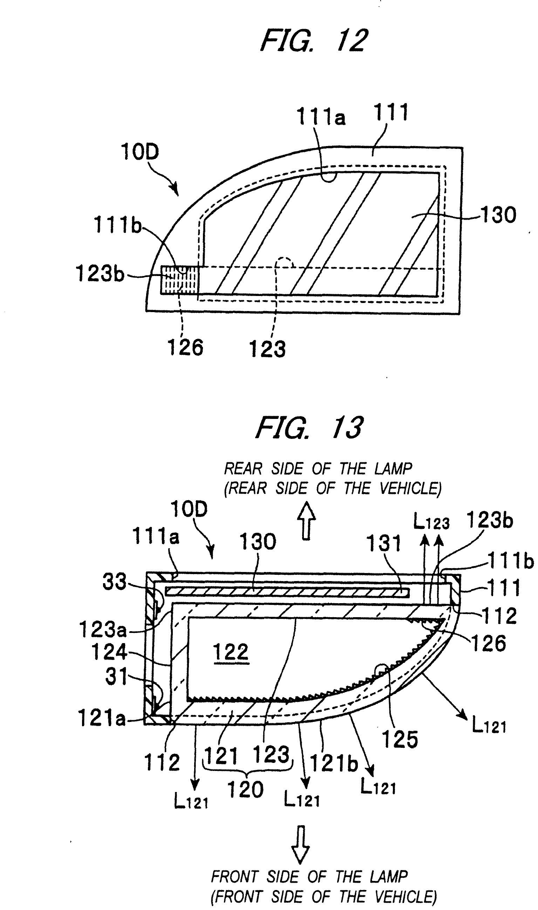

As shown in Figs. 10 and 13, the side turn signal lamps 10D are side-mirror housings (door mirror housings) 111 attached to doors 100 of the vehicle located on the driver's seat side and the passenger seat side, respectively.

Each of the side turn signal lamp 10D has a light guide member 120 which is attached to and incorporated in the door mirror housing 111 (a lamp body) and a pair of LEDs 31, 33 for causing a pair of light guides 121, 123 of the light guide member 120 to emit light, respectively. Unlike the vehicle lamps 10A, 10B, 10C according to the first, second, and third embodiments, each side turn signal lamp 10D is not equipped with a front cover.

As shown in Fig. 11, a slit-shaped opening 112 which is longer in the right-left direction is formed through the front wall of the housing 111 at a position close to its bottom. The light guide member 120 is fixed to the housing 111 by a fixing means (not shown; e.g., by screwing) such that the first light guide 121 of the light guide member 120 is engaged with the periphery of the slit-shaped opening 112.

The pair of light guides 121, 123 extend generally in the right-left direction with a gap 122 formed in between, and each of them has a rectangular cross section. The first light guide 121 is curved so as to conform to the curved shape of the housing 111, and a front portion, exposed through the slit-shaped opening 112 of the housing 111, is approximately flush with the external surface of the housing.

On the other hand, a side mirror main body 130 is housed in the housing 111 so as to directly face a mirror opening 111a. The second light guide 123 is disposed on the front side of the side mirror main body 130 and extends straightly in the right-left direction beyond an outside end 131 (in the vehicle width direction) of the side mirror main body 130. As shown in Figs. 12 and 13, the portion, located outside the outside end 131 of the side mirror main body 130, of the second light guide 123 is exposed through a slit-shaped opening 111b which is continuous with the mirror opening 111a.

A connecting portion 124 connecting base ends of the light guides 121, 123 has a light entrance portions 121a, 123a, and LEDs 31, 33 are disposed at such positions as to directly face the respective light entrance portions 121a, 123a.

Internally reflecting steps 125 and internally reflecting steps 126 are formed on surfaces of the first and second light guides 121, 123 that are opposed to each other across a gap 122. The surface of the first light guide 121 is formed with the internally reflecting steps 125 over its entire length of extension. In the second light guide 123, only a tip portion (extending beyond the outside end 131 of the side mirror main body 130) of its outside surface is formed with the internally reflecting steps 126.

Therefore, in the first light guide 121, guided light is reflected by the internally reflecting steps 125 and output forward from a front light exit portion 121b of the first light guide 12 as diffuse light L121.

On the other hand, in the second light guide 123 which is located on the front side of the side mirror main body 130, guided light is reflected by the internally reflecting steps 126 and output rearward from a light exit portion 123b which is opposed to the internally reflecting steps 126 as diffuse light L123.

That is, on the front side of the lamp 10D, the front light exit portion 121b of the light guide 121 emits light forward. On the rear side of the lamp 10D, the light exit portion 123b emits light rearward.

While the present invention has been described with reference to a certain embodiment thereof, the scope of the present invention is not limited to the embodiment described above, and it will be understood by those skilled in the art that various changes and modifications may be made therein without departing from the scope of the present invention as defined by the appended claims.

For example, in the first to third embodiments described above, reflectors 34, 34A are used as optical members for forwardly reflecting and distributing the light output from the light guide However, the optical members are not limited to reflectors, and may alternatively be optical fibers or other light guides having a rear surface formed with internally reflecting steps.

Further, the number of light sources and the configuration of the light entrance portions of the light guides are not limited to the embodiments described above. For example, the arrangement and configuration of the light source 31 and the light entrance portions 21a, 23a of the second embodiment can be used in other embodiments. Likewise, the arrangement and configuration of the light source 31, the reflector 40, and the light entrance portions 21a, 23a of the third embodiment can be used in other embodiments. Furthermore, the light sources are not limited to LEDs, and other types of light sources may be used.

## Claims

1. A vehicle lamp (10A, 10B, 10C, 10D) comprising:
a light guide member (20, 120); and
at least one light source (31, 33),
wherein the light guide member (20, 120) comprises:
a light entrance portion (21a, 23a, 121a, 123a) from which light from the at least one light source (31, 33) enters the light guide member (20, 120);
a first light guide (21, 121) having first internally reflecting steps (25) configured to internally reflect a first part (L21, L121) of the light, and a first light exit portion (21b, 121b) from which the first part (L21, L121) of the light is output from the first light guide (21, 121); and
a second light guide (23, 123) having second internally reflecting steps (26) configured to internally reflect a second part (L23, L123) of the light, and a second light exit portion (23b, 123b) from which the second part (L23, L123) of the light is output from the second light guide (23, 123),
wherein the first light guide (21, 121) and the second light guide (23, 123) extend such that a gap (22) is provided between the first light guide (21, 121) and the second light guide (23, 123),
the light guide member (20, 120) is formed as a single unitary piece, and
the first light guide (21, 121) and the second light guide (23, 123) are configured and arranged such that the first light guide (21, 121) does not interfere with the second part (L23. L123) of the light that has been output from the second light exit portion (23b, 123b), and such that the second light guide (23, 123) does not interfere with the first part (L21, L121) of the light that has been output from the first light exit portion (21b, 121b).

2. The vehicle lamp (10A, 10B, 10C, 10D) according to claim 1, wherein the light guide member (20, 120) is an integrally molded piece made of a synthetic resin.

3. The vehicle lamp (10A, 10B, 10C, 10D) according to claim 1 or 2, wherein the first light guide (21, 121) and the second light guide (23, 123) extend substantially parallel to each other.

4. The vehicle lamp (10A, 10B, 10C, 10D) according to any one of the preceding claims, wherein the first internally reflecting steps (25) are provided on a first surface of the first light guide (21, 121) along a longitudinal direction of the first light guide (21, 121), and the second internally reflecting steps (26) are provided on a second surface of the second light guide (23, 123) along a longitudinal direction of the second light guide (23, 123).

5. The vehicle lamp (10A, 10B, 10C, 10D) according to claim 4, wherein the first surface and the second surface are opposed to each other across the gap (22).

6. The vehicle lamp (10A, 10B) according to any one of claims 1 to 5, further comprising an optical member (34, 34A) disposed behind or lateral to the second light guide (23) configured to reflect the second part (L23) of the light in a forward direction of the lamp (10A, 10B),
wherein the first light guide (21) is disposed in front of the second light guide (23),
the first light exit portion (21b) is provided on a front surface of the first light guide (21) to output the first part (L21) of the light in the forward direction, and
the second light exit portion (23b) is provided on a rear surface or a lateral surface of the second light guide (23) to output the second part (L23) of the light in a rearward direction or in a lateral direction toward the optical member (34, 34A).

7. The vehicle lamp (10C) according to any one of claims 1 to 5, further comprising:
a first optical member (34) disposed lateral to the first light guide (21, 121) and configured to reflect the first part (L21) of the light in a forward direction of the lamp (10C); and
a second optical member (34) disposed lateral to the second light guide (23, 123) and configured to reflect the second part (L23) of the light in the forward direction,
wherein the first light guide (21) and the second light guide (23) are arranged side by side in a lateral direction of the lamp (10C),
the first light exit portion (21b) is provided on a lateral surface of the first light guide (21) to output the first part (L21) of the light in the lateral direction toward the first optical member (34), and
the second light exit portion (23b) is provided on a lateral surface of the second light guide (23) to output the second part (L23) of the light in the lateral direction toward the second optical member (34).

8. The vehicle lamp (10D) according to any one of claims 1 to 5, wherein the first light guide (121) is disposed in front of the second light guide (123),
the first light exit portion (121b) is provided on a front surface of the first light guide (121) to output the first part (L121) of the light in a forward direction of the lamp (10D), and
the second light exit portion (123b) is provided on a rear surface of the second light guide (123) to output the second part (L123) of the light in a rearward direction of the lamp (10D).

9. The vehicle lamp (10A, 10B, 10D) according to any one of the preceding claims wherein the at least one light source (31, 33) is disposed to directly face the light entrance portion (21a, 23a, 121a, 123a).

10. The vehicle lamp (10A, 10B, 10C, 10D) according to any one of the preceding claims, wherein the light entrance portion (21a, 23a, 121a, 123a) comprises:
a first light entrance portion (21a, 121a) from which the first part (L21, L121) of the light enters the first light guide (21, 121); and
a second light entrance portion (23a, 123a) from which the second part (L23, L123) of the light enters the second light guide (23, 123).

11. The vehicle lamp (10C) according to claim 10, further comprising a first ellipsoidal reflector (41) and a second ellipsoidal reflector (42),
wherein the at least one light source (31, 33) is a single light source (31);
the first ellipsoidal reflector (41) and the second ellipsoidal reflector (42) has a common first focal point (f1) at or near a position of the light source (31),
the first ellipsoidal reflector (41) has a second focal point (f2) at or near a position of the first light entrance portion (21a), and
the second ellipsoidal reflector (42) has a second focal point (f2) at or near a position of the second light entrance portion (23a).
